# EUROPEAN PATENT APPLICATION

(11) **EP 1 367 791 A2**
(43) Date of publication of application: **03.12.2003**
(21) Application number: 03012539.7
(22) Date of filing: 02.06.2003
(51) Int. Cl.: H04L 27/26

(54) **Gain control for a multicarrier modem**

(30) Priority: 31.05.2002 JP 2002160494
(71) Applicant: Panasonic Communications Co., Ltd., Fukuoka-shi, Fukuoka 812-8531 (JP)
(72) Inventor: Tomita, Keiichi, Yokohama-shi, Kanagawa 222-0032 (JP); Noma, Nobuhiko, Yokohama-shi, Kanagawa 222-0033 (JP)
(74) Representative: Grünecker, Kinkeldey, Stockmair & Schwanhäusser Anwaltssozietät

(57) **Abstract**

A receiver of a multicarrier modem comprises a gain controller (101) followed by an A/D convertor (102a) and a FFT unit (27). By analysing (20) the subcarriers within a synchronisation symbol, the receiver sets the gain controller appropriately (109).

## Description

### BACKGROUND OF THE INVENTION

### 1. Field of the Invention

This invention relates to a DSL modem apparatus and communication control method for DSL communication that execute data communication using a multi-carrier method.

### 2. Description of Related Art

Data communication apparatus using a conventional analog modem performs data communication via telephone line. When such a telephone line is used for data communication, signal output value (gain amount) received at the receiver apparatus becomes attenuated, thereby preventing a more effective data reception. Therefore, in order to improve the data reception, an automatic gain control (AGC) is performed to correct the gain amount. In addition, phases of symbols occasionally shift because of status of path transferring signals. Therefore, a frequency domain equalizer (FEQ) control is provided to correct the phase shifting of the reception symbols.

However, the ADSL standard (e.g., G.lite, G.dmt, etc.) defined by the ITU-T uses a multi-carrier method that simultaneously employs a plurality of carriers. Therefore, during a data transfer period, i.e., SHOWTIME, the AGC and/or FEQ executed in the same manner as for an analog modem require a massive amount of calculation, which is very difficult to perform with the capability of the current digital signal processing (DSP) system.

### SUMMARY OF THE INVENTION

This invention addresses the above-described problems. The purpose of the present invention is to provide a DSL modem apparatus and a communication control method for DSL communication that can provide stable communication using the AGC and FEQ to all carriers without increasing the calculation amount during multi-carrier method data communication.

This invention performs the AGC and/or FEQ using a sync symbol (or a known symbol having similar characteristics) periodically transmitted after a data communication during multi-carrier method DSL communication.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a configuration of a communication system according to an embodiment of the present invention;
Fig. 2 is a functional block diagram illustrating a transceiver of Fig. 1;
Fig. 3 is a functional block diagram illustrating an AFE and AGC controller of Fig. 2;
Fig. 4 illustrates a configuration of an integration filter of Fig. 3;
Fig. 5 is a flowchart illustrating the AGC and FEQ in the communication system according to the embodiment of the present invention;
Fig. 6 is a timing chart illustrating the first half of an initialization sequence;
Fig. 7 is a timing chart illustrating the second half of the initialization sequence;
Fig. 8 illustrates signal status before and after the AGC;
Fig. 9 illustrates frequency characteristics of the REVERB signal;
Fig. 10 (a) illustrates an eye pattern of 2 bit data;
Fig. 10 (b) illustrates a relationship between a reception point and a standard point; and
Fig. 11 illustrates an example of an FEQ correction.

### DETAILED DESCRIPTION OF PREFERRED EMBODIMENTS

The embodiment of the present invention, to which the DSL modem apparatus communication control method are applied, is explained in the following, in reference to the above-described drawings.

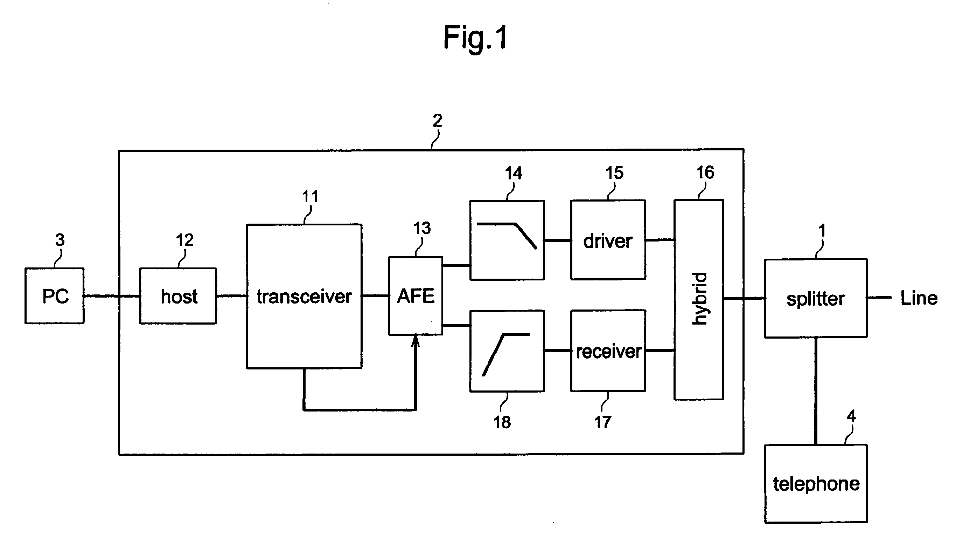

Fig. 1 illustrates a diagram of a communication system at the ATU-R side according to the present invention. In the communication system as illustrated in Fig. 1, public phone line or a similar phone line (hereafter referred to as line) is connected to ADSL communication apparatus 2 via splitter 1. Further, communication terminal 3 is connected to ADSL communication apparatus 2. When communication terminal 3 and telephone 4 share one line, splitter 1 is necessary. However, when telephone 4 is not used, splitter 1 is not needed. It is also possible to have a configuration where communication terminal 3 internally installs ADSL communication apparatus 2. This invention can be applied to the ATU-C side as well as the ATU-R side.

ADSL communication apparatus 2 includes transceiver 11 that executes a handshake step in accordance with G.hs, initialization sequence in accordance with G.lite/G.dmt, and data communication which is referred to as SHOWTIME. ADSL communication apparatus 2 also includes host 12 that controls entire operations including the one of transceiver 11. At the line side of transceiver 11, driver 15 is connected to a DA converter of AFE 13 via analog filter 14, so that analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

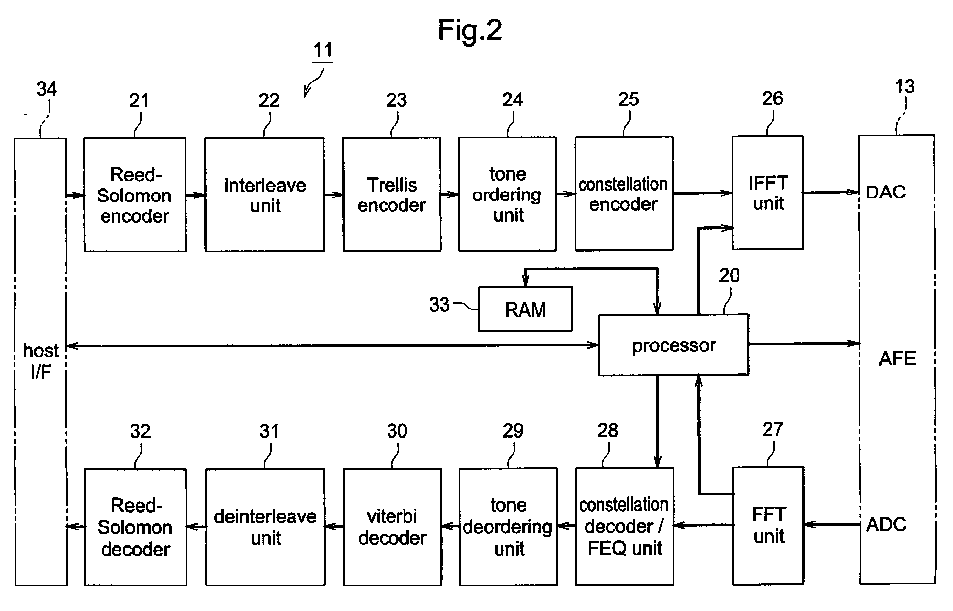

Fig. 2 is a functional block diagram illustrating transceiver 11. Processor 20 has a function to execute the handshake step and initialization step prior to initiating data communication (SHOWTIME). Processor 20 also executes the later-described AGC during the data communication (SHOWTIME).

The transmission process side of transceiver 11 includes Reed-Solomon encoder 21 that adds a redundancy bit for checking error, interleave unit 22 that sorts data to enable a burst error correction during Reed-Solomon decoding, Trellis encoder 23 that performs data convolution from a Trellis encoding, tone ordering unit 24 that lays out a bit number for each carrier, constellation encoder 25 that converts transmission data into constellation coordinates (topology), and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data laid out to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. Especially, as described later, constellation decoder/FEQ unit 28 performs an FEQ process using a sync symbol after initiating the data communication. Transceiver 11 is connected to host 12 via host interface (I/F) 34.

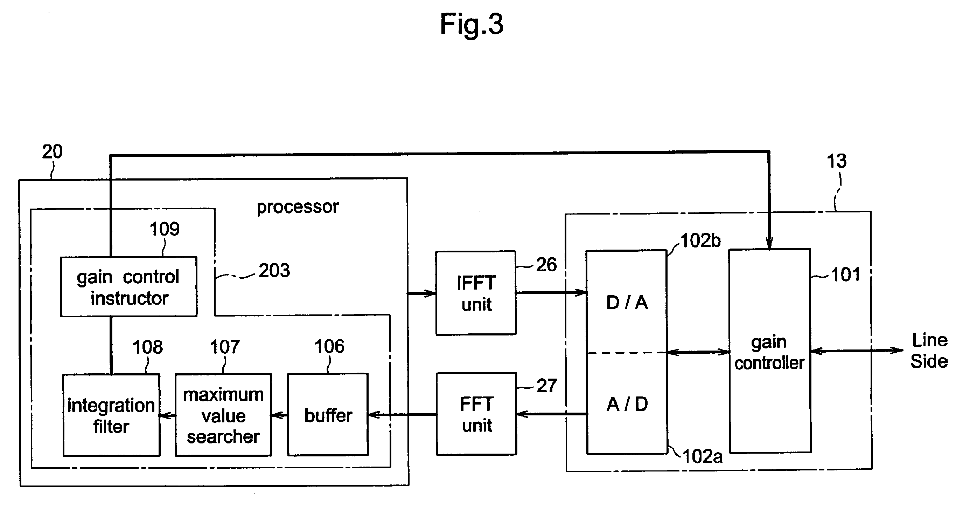

Fig. 3 illustrates configurations of a bock related to the AGC (which is one of the functions of processor 20) and AFE 13. AFE 13 includes gain controller 101 that performs a gain control on a reception analog signal received from the line or a transmission analog signal output to the line, AD converter 102a that performs a sampling by synchronizing the received analog signal with a sampling clock, and DA converter 102b that converts the digital transmission analog signal into an analog signal. AGC controller 203 includes buffer 106 that stores the FFT output, maximum value retriever 107 that retrieves a maximum value from the FFT output (stored by buffer 106), integration filter 108 that performs a predetermined integral calculation on the maximum value retrieved by maximum value retriever 107, and gain control instructor 109 that determines the need of the gain control by gain controller 101, from the output of integration filter 108.

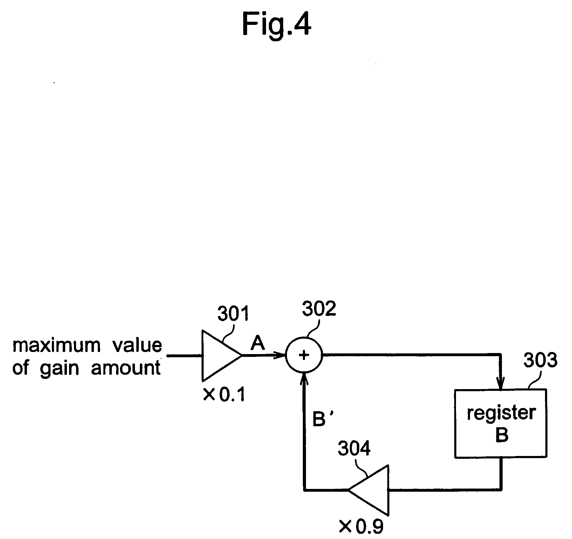

Fig. 4 is a block diagram illustrating a configuration of integration filter 108. Integration filter 108 multiplies the maximum carrier energy amount (retrieved by maximum value retriever 107) by 0.1 using multiplier 301, which is referred to as value A, and outputs value A to adder 302. Then, integration filer 108 multiplies value B (stored in inner register 303) by 0.9 using multiplier 304, which is referred to as value B', and outputs value B' to adder 302. Then, integration filter 108 uses adder 302 to add value A (input from multiplier 301) and value B' (input from multiplier 304), which is referred to as value B, and outputs value B to inner register 303. This value B is stored within inner register 303.

Since the above described predetermined integral calculation is performed on the maximum carrier energy amount that is retrieved by maximum retriever 107, even when the maximum carrier energy amount is suddenly decreased afterwards, it is possible to prevent a situation where value B is largely affected because of the lowered energy amount.

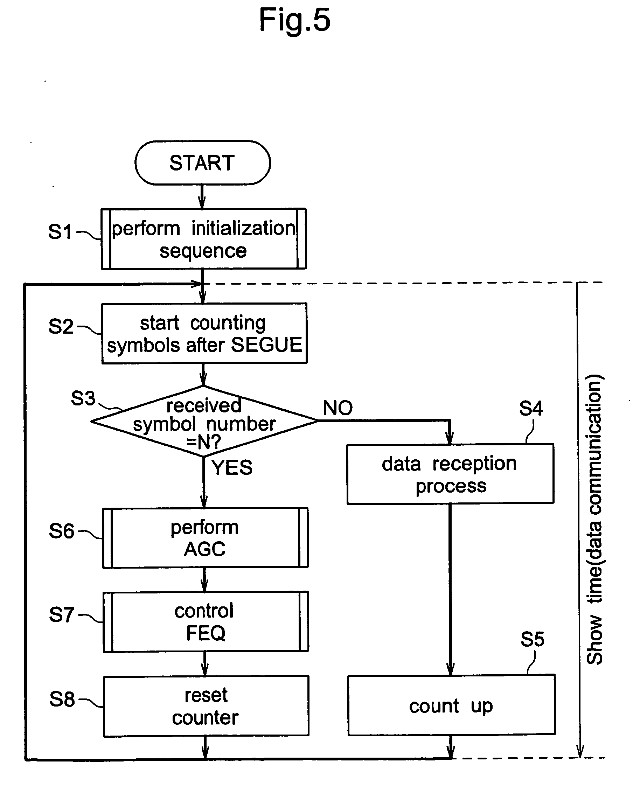

Fig. 5 is a flowchart illustrating an operation of the above-described configuration according to the embodiment of the present invention. For this explanation, the ATU-R operation is used, however, the invention can also be applied to the ATU-C.

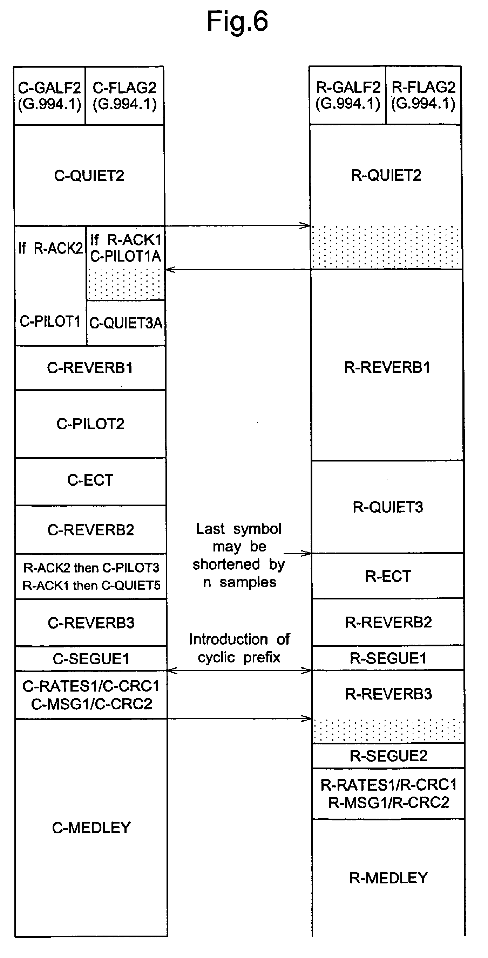

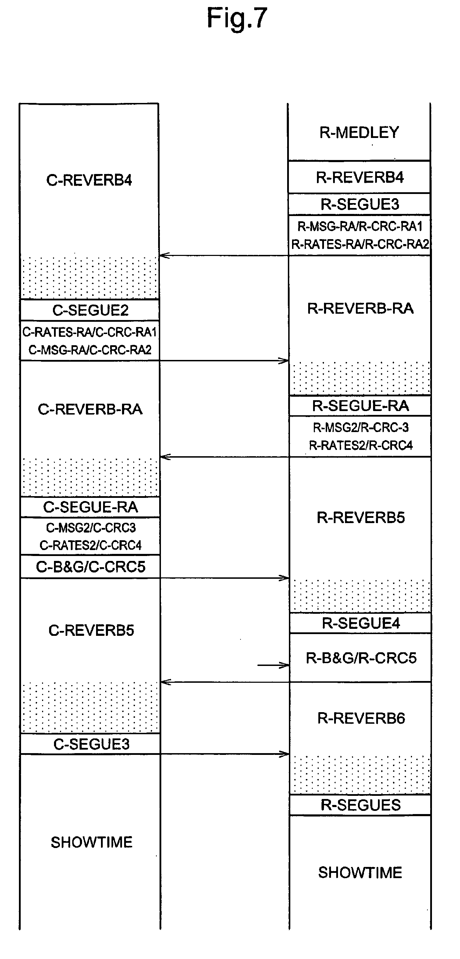

At Step S1, initialization sequence is performed. Figs. 6 and 7 illustrate signals and timings used during the initialization sequence. The left side is the ATU-C (so-called "center"), and the right side is the ATU-R (so-called "remote").

The ATU-C transmits three types of SEGUE signals: C-SEGUE1; C-SEGUE2; and C-SEGUE-RA, each of which is followed by information transmissions such as C-RATES, C-MSG, etc. When C-SEGUE3 is transmitted at the final stage of the initialization sequence, data communication (SHOWTIME) is started.

The ATU-R transmits four types of SEGUE signals: R-SEGUE1; R-SEGUE2; R-SEGUE-RA; and R-SEGUE4, each of which (excluding R-SEGUE1) is followed by information transmissions such as R-RATES, R-MSG, etc. When R-SEGUE5 is transmitted at the final stage of the initialization sequence, data communication (SHOWTIME) is started.

After 10 symbols of C-SEGUE3 are received during the SHOWTIME, a counter starts counting the symbol number received after starting the SHOWTIME (Step S2). During the SHOWTIME, there are periodical phases called sync symbols. At the remote side, after C-SEGUE5 is received, the counter that counts the symbol number is started.

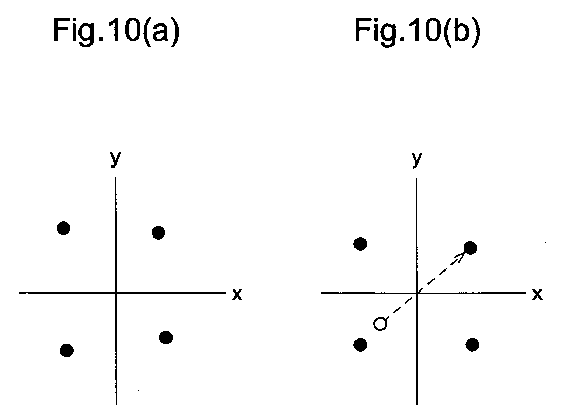

Hereafter, an explanation is given why the AGC and FEQ processes using the sync symbols can decrease the calculation amount. A sync symbol is a simple symbol similar to REVERB signal that is transmitted during the initialization. While the REVERB signal is random from a frequency perspective, each carrier has the same eye pattern. Similarly, it is decided that a sync symbol is transmitted with a plurality of carriers, each carrier always having 2 bit data for transmission. Therefore, sync symbol is modulated into one of four transmission points mutually having 90 degrees from one another for transmission, as illustrated in Fig. 10 (a). Further, a sync symbol has a determined transmission point to be modulated into, out of four standard points (transmission points) for each carrier.

When the AGC is performed on the reception signals, the correction is made in the direction of amplitude so that the reception symbol is proximate to the target standard point. However, when there are four standard points, calculation load is limited to an allowable range. Furthermore, since the target standard point for each carrier is known, the calculation amount is further lightened. Even when the symbol reception point is received at a proximity of another standard point (which is not the target standard point), as shown in Fig. 10 (b), it is possible to appropriately perform the AGC so that the reception symbol is brought closer to the targeted standard point, since the target standard point is already known.

However, for normal data transmission, each carrier is loaded with as big bit number as possible in order to improve the transfer efficiency. Therefore, when a bit number of a symbol increases, such as 4-5 bits per symbol, the standard number of the target standard points for the AGC will be increased, e.g., 16 points and 32 points. Therefore, the calculation load will exceed the allowable range.

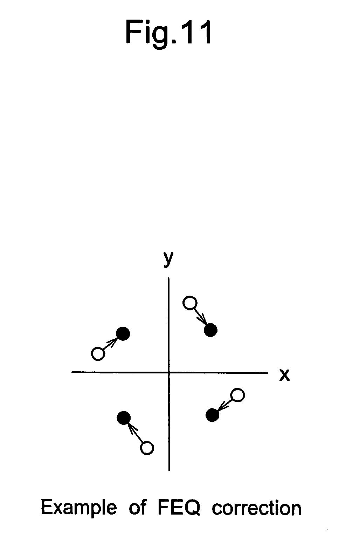

When the FEQ process is performed on the reception symbol, gain amount and topology are corrected so that the reception symbols (clear dots) are moved to their standard points (solid dots) as shown in the example of Fig. 11. Similarly, it is possible to minimize the calculation amount since there are four standard points for a sync symbol and the target standard point is known for each carrier.

When a sync symbol is transmitted every N symbols, during SHOWTIME, the AGC and FEQ processes can be performed with a minimum calculation amount during the SHOWTIME period, when a sync symbol is used for every N symbol. When each symbol is received, it is checked whether the number of received symbols equals to N (step S3). When the number of reception symbols is less than N, the reception symbol is processed and the reception symbol counter is increased (steps S4 and S5). The above process is repeated every time there is a symbol reception. When the number of reception symbols equals to N at step S3, it is determined that the received symbol is a sync symbol. Therefore, the AGC and FEQ processes are performed using the sync symbol (steps S6 and S7).

First, AGC is performed at step S6, using the sync symbol. As shown in Fig. 3, a modulation signal of the sync symbol is sampled by AD converter 102a of AFE 13. When the signal is converted into sampling data of a predetermined number, FFT unit 27 performs a fast Fourier transform. In particular, when FFT is performed on the sync symbol, signal values of all carriers can be obtained as a form of constellation for each carrier (as coordinate values in complex plane coordinates). Accordingly, carrier signal value (energy value) for each symbol is shown as one coordinate point on the R-I (Real-Imaginary) plane, and such (R, I) coordinates corresponding to each carrier are stored in buffer 106.

When (R, I) coordinate information corresponding to the sampling data for each symbol is stored in buffer 106, maximum value retriever 107 retrieves a carrier energy amount having the maximum value, based on the (R, I) coordinates, among energy amounts for multiple carriers within a sync symbol. The distance from the origin point to (R, I) coordinates for each sampling data on the R-I planes are equivalent to the energy amount for each carrier. Therefore, by comparing the distance from the origin point to (R, I) coordinates for each sampling data, maximum value retriever 107 can retrieve the carrier energy amount having the maximum value.

Integration filter 108 performs a predetermined integration calculation on the carrier energy amount of the maximum value, which is retrieved by maximum value retriever 107. Gain control indicator 109 compares value B (obtained from the integral calculation) with the target range. When value B is greater than the upper limit value of the target range, a gain control is instructed for gain controller 101 to decrease the energy amount of the received analog signal. For example, all carrier energy amounts from the future input signals are decreased by 1db. Conversely, when value B is smaller than the lower limit value of the target range, gain control is instructed for gain controller 101 to raise the energy amount of the receiving analog signals (e.g., raising all carrier energy amounts from the future input signals by 1db). In addition, when value B is within the target range, no gain control is instructed.

With the above-described gain control, it is possible to perform a gain control according to the signal degradation, which is cause by line conditions or the like, and securely avoid a situation where some carriers overflow. Therefore, even when multi-carriers are used for communication, it is possible to appropriately perform a gain control so as to prevent an overflow.

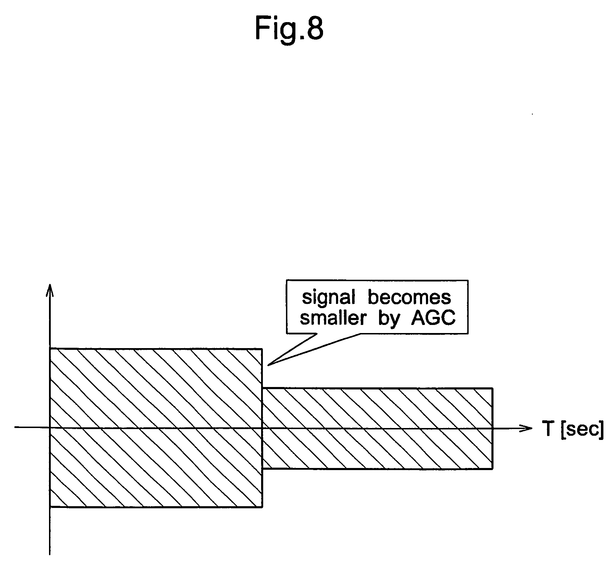

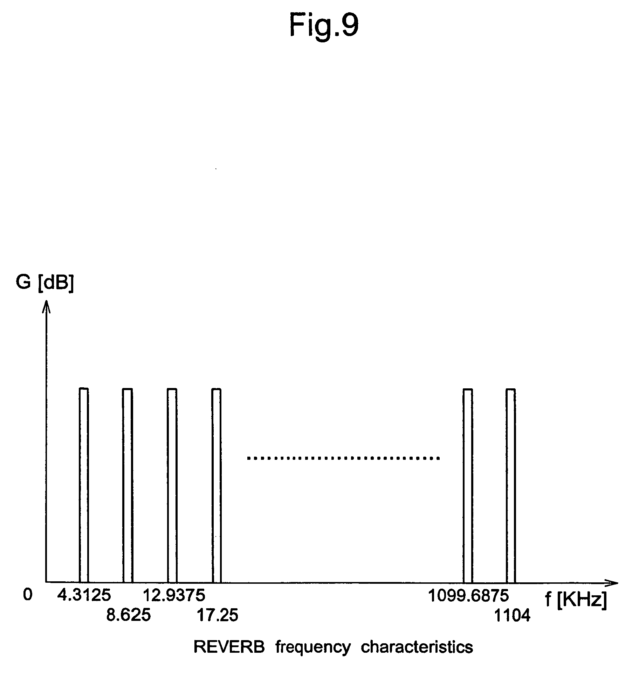

For example, when the amplitude of the input signal exceeds the dynamic range of AD converter 102a as shown in Fig. 8, gain controller 101 narrows down the input signal amplitude. Therefore, all of the amplitudes of the entire input signals are arranged to fall within the dynamic range of AD converter 102. Fig. 9 illustrates frequency characteristics of the REVERB signal after the gain control.

At step S7, the FEQ process is performed by constellation decoder/FEQ unit 28 using a sync symbol. Constellation decoder/FEQ unit 28 corrects a gain and topology in order to move the reception point to the standard point, based from the constellation of the received symbol. Since the sync symbol forms a 2 bit eye pattern, as shown in Fig. 10, it is possible to have a much simpler calculation of which of the four standard points the reception point belongs to, compared to having 32 standard points, for example.

As described above, the FEQ process is performed using the sync symbol having 2 bit eye pattern. Since the calculation amount is small, it is possible to perform the FEQ process even during the SHOWTIME.

When the AGC and FEQ processes are finished using the sync symbol, the counter is reset (step S8), and the control proceeds to step S2.

The above explanation was given using the example of ADSL standard G.lite and G.dmt. However, the preset invention is not limited to the method but can be applied to any communication methods that employ the multi-carrier method and periodically (or at a known timing) transmit signals equivalent to a sync symbol during the data communication. The signal equivalent to the sync symbol should be detectable by the reception side, modulated by the multi-carrier method, and having few layout bit number (calculation amount that can be processed by the DSP for a 1 symbol period).

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2002-160494 filed on May 31, 2002, entire content of which is expressly incorporated by reference herein.

## Claims

1. A DSL modem apparatus comprising:
a receiver that receives an analog signal modulated with a multi-carrier method;
a gain controller that controls a gain of the received analog signal;
an AD converter that samples the received analog signal processed by said gain controller and outputs sampling data;
a demodulator that performs a Fourier transform on the sampling data per symbol unit, demodulates the data into a carrier unit, and outputs demodulated data;
a sync symbol retriever that retrieves a sync symbol from the demodulated data, the sync symbol being transmitted from an opposing side after data communication is initiated using the multi-carrier method; and
a controller that enables said gain controller to perform a gain control based on individual signal value of a plurality of carriers within the retrieved sync symbol.

2. A DSL modem apparatus comprising:
a receiver that receives an analog signal modulated with a multi-carrier method;
a gain controller that controls a gain amount of the received analog signal;
an AD converter that samples the received analog signal processed by said gain controller and outputs sampling data;
a demodulator that performs a Fourier transform on the sampling data per symbol unit, demodulates the data into a carrier unit, and outputs demodulated data;
a sync symbol retriever that retrieves a sync symbol from the demodulated data, the sync symbol being transmitted from an opposing side after data communication is initiated using the multi-carrier method; and
an FEQ unit that corrects a gain and topology of a plurality of carriers within the retrieved sync symbol so that a reception point for each carrier is moved to a target point.

3. A DSL modem apparatus comprising:
a demodulator that demodulates reception data retrieved from a line into a carrier unit and outputs demodulated data;
a sync symbol retriever that retrieves a sync symbol from the demodulated data, the sync symbol being transmitted from an opposing side after data communication is initiated using a multi-carrier method; and
a controller that enables a gain control based on individual signal value of a plurality of carriers within the retrieved sync symbol.

4. A DSL modem apparatus comprising:
a demodulator that demodulates reception data retrieved from a line into a carrier unit and outputs demodulated data;
a sync symbol retriever that retrieves a sync symbol from the demodulated data, the sync symbol being transmitted from an opposing side after data communication is initiated using a multi-carrier method; and
an FEQ unit that corrects a gain and topology of a plurality of carriers within the retrieved sync symbol so that a reception point for each carrier is moved to a target point.

5. The DSL modem apparatus according to claim 1, wherein said sync symbol retriever counts the received symbols since the data communication is initiated and includes a counter that resets at a predetermined number, the number corresponding to a period at which a sync symbol is transmitted.

6. The DSL modem apparatus according to claim 1, wherein fixed bits are assigned to each carrier of the sync symbol, the fixed bits having 2 bits.

7. The DSL modem apparatus according to claim 1, wherein a topology of the sync symbol is fixed, the topology being used to modulate bit data of each carrier.

8. A DSL modem apparatus comprising:
a demodulator that demodulates reception data retrieved from a line into a carrier unit and outputs demodulated data;
a specific symbol retriever that retrieves a known symbol from the demodulated data, the known symbol being transmitted from an opposing side after data communication is initiated using a multi-carrier method; and
a controller that enables a gain control based on individual signal value of a plurality of carriers within the retrieved known symbol,
wherein fixed bits are assigned to each carrier of the known symbol, the fixed bits having 2 bits.

9. A DSL modem apparatus comprising:
a demodulator that demodulates reception data retrieved from a line into a carrier unit and outputs demodulated data;
a known symbol retriever that retrieves a known symbol from the demodulated data, the known symbol being transmitted from an opposing side after data communication is initiated using a multi-carrier method; and
an FEQ unit that corrects a gain and topology of a plurality of carriers within the retrieved known symbol so that a reception point for each carrier is moved to a target point,
wherein fixed bit of 2 bits are assigned to each carrier of the known symbol.

10. A communication control method comprising:
demodulating reception data retrieved from a line into a carrier unit and outputting demodulated data;
retrieving a sync symbol from the demodulated data, the sync symbol being transmitted from an opposing side after data communication is initiated using a multi-carrier method; and
enabling a gain control based on individual signal value of a plurality of carriers within the retrieved sync symbol.

11. A communication control method comprising:
demodulating reception data retrieved from a line into a carrier unit and outputting demodulated data;
retrieving a sync symbol from the demodulated data, the sync symbol being transmitted from an opposing side after data communication is initiated using a multi-carrier method; and
correcting a gain and topology of a plurality of carriers within the retrieved sync symbol so that a reception point for each carrier is moved to a target point.
